# EUROPEAN PATENT SPECIFICATION

(11) **EP 1 113 022 B1**
(45) Date of publication and mention of the grant of the patent: **22.03.2006**
(21) Application number: 00100007.4
(22) Date of filing: 03.01.2000
(51) Int. Cl.: C08B 31/04, C08L 3/06, B44C 3/06

(54) **Biodegradable block for models**
Bioabbaubare Blöcke für Modelle
Blocs biodégradables pour des modèles

(30) Priority: 02.01.2000 JP 2000031207
(43) Date of publication of application: 04.07.2001
(73) Proprietor: JAPAN CORN STARCH CO., LTD., Nagoya-shi, Aichi 460-0002 (JP)
(72) Inventor: Miyachi, Nobuo, Okazaki-shi, Aichi 444-3513 (JP)
(74) Representative: Jacob, Reuben Ellis

(56) References cited:
- EP-A- 0 814 092
- WO-A-95/04083
- WO-A-96/16116
- WO-A-97/03121
- US-A- 5 693 786
- US-A- 5 714 540
- US-A- 5 714 601
- US-A- 5 728 824
- US-A- 5 869 647

## Description

The present invention relates to a method of producing biodegradable models, which are made of a biodegradable plastics material comprising a biodegradable base polymer comprising a starch ester or a mixture of a starch ester and a cellulose ester.

The term model referred to herein means a so-called patterning model to be used for producing final products, which includes, for example, prototypes, master models, styling models, design models, foundry patterns, crafting models, copying models, and models for confirming tapes in NC machining systems.

The degree of substitution (DS) referred to herein indicates a degree of esterification of polymer ester, which is represented by an average value (at most DS of being up to 3) of substituted hydroxyl groups per one glucose residue in a polymer ester. This DS value is determined by the method referred to the paper as follows; R L. Whistler, ed., "Method in Carbohydrate Chemistry", Vol. III-Cellulose, Academic Press, Inc., New York, p. 201-203, (1964).

Recently, models such as those mentioned above are being made of plastic block, in place of conventional wood and the like, since plastic blocks do not require any care for grain orientation, hygroscopicity and other matters. To produce such models, in general, plastic blocks are cut or machined with hand tools, such as chisels, planes, saws, files and rasps, or with machine tools such as NC machines and lathes.

For their necessary characteristics, plastic blocks for such models are required to have good workability and machinability and also predetermined mechanical properties (e.g., dimension stability, heat resistance, strength). It has heretofore been said that nothing but thermosetting plastics could satisfy such characteristics with ease, for example, used are unsaturated polyester resins, phenolic resins, epoxy resins and polyurethane resins.

On the other hand, recently, there is increasing a demand for biodegradable plastic, especially for those of industrial waste, which can be recycled or which do not pollute the environment when discarded, from the viewpoint of saving natural resources and of environmental protection.

In general, thermosetting plastics to be used for the models, being different from thermoplastic plastics, are not plasticized even under heat but could be only decomposed under heat, and it is difficult to recover and recycle them.

Therefore, at present, the models made of such thermosetting plastics are, after having been used to be useless, discarded as industrial wastes, thus ending up in incinerators or landfills.

However, where these are incinerated, they give high combustion heat to damage incinerators and, in addition, often generate much soot and smoke, as being made of thermosetting plastics. If, on the other hand, these are desired to be in landfills, the spaces for landfills are insufficient and, in addition, they do not decompose almost semi-permanently to eventually have some negative influences on soil organisms, etc.

Given the situation, biodegradable plastics are now desired which are free from the problems with plastics, especially thermoplastic plastics to be discarded. Biodegradable plastics can be composted in kitchen garbage processors or composters. In addition, even when discarded in landfills, they are decomposed in soil without having almost no negative influence on soil organisms and others in landfills.

Biodegradable plastics that are at present commercially available include, for example, polyesters to be produced by microorganisms (e.g., polyhydroxybutyrate valerate), and synthetic plastics, such as linear aliphatic polyesters, polycaprolactones, polylactic acids and starch-polyvinyl alcohol alloys.

However, it is said that many such commercially-available biodegradable plastics are unfavorable for use in blocks for models because of their poor physical properties. Specifically, their workability or machinability with hand tools or machine tools is poor. In difficult to cut and work with hand tools; and, if they are machined with machine tools, their cut surfaces are partly melted, and it is difficult to obtain products with well cut surfaces (well finished surfaces).

For these reasons, the development of biodegradable plastics with both good workability and machinability and good mechanical and physical properties that are suitable for use in blocks for models, while naturally having good biodegradability, has been desired in the art.

The patent invention seeks to provide biodegradable models, which have good workability and machinability and which have good mechanical characteristics, while naturally having good biodegradability.

The present inventors have found that shaped products of esterified starches can be easily cut with hand tools such as knives. On the basis of this finding, they have further found that a biodegradable thermoplastic composition comprising an esterified starch having a particular degree of substitution with particular substituents or a mixture of such an esterified starch and an esterified cellulose having a particular degree of substitution with particular substituents has good workability and machinability and good mechanical properties (especially, good dimensional stability and high heat resistance) suitable for use for models.

In accordance with the invention, there is now provided a method of producing a biodegradable model comprising the steps of:
placing into a mold a biodegradable plastics material comprising a biodegradable polymer comprising an esterified starch having a degree of substitution (DS) of 0.4 or more;
melting the biodegradable plastics material in the mold using heat;
shaping the biodegradable plastics material in the mold under compression so as to form a block; and
cutting or machining the block thereby to form the biodegradable model.

Preferably the esterified starch comprises at least one of
(1) a vinyl esterified starch prepared by esterifying a starch with an esterifying reagent of a vinyl ester in a non-aqueous organic solvent in the presence of an esterification catalyst;
(2) an esterified, polyester-grafted starch which is formed by esterifying starch and grafting starch with polyester; and
(3) a mixed esterified starch of which hydrogen in the reactive hydroxyl group of the same starch molecule is substituted with an acyl group that has 2 to 4 carbon atoms (short chain acyl group) and an acyl group that has 6 to 18 carbon atoms (long chain acyl group).

Additionally the esterified starch may contain a starch ester having a DS of 1.0 to 2.8, which is produced by a process wherein a purified starch containing at least 50% of amylose is reacted with an acylation reagent in the presence of a basic catalyst in an anhydrous aprotic solvent.

Esterified starch have been reported in literature, but as far as we, the present inventors know, there is no report referring to the use of esterified starches as thermoplastics to give commercial product.

On the other hand, of esterified cellulose, cellulose acetate and cellulose acetate propionate are much used as plastic materials for producing shaped articles and films.

We have already proposed that esterified starches and mixtures of esterified starches and esterified cellulose are both usable as biodegradable plastic materials, in our own prior patent applications (see WO 95/04083, WO 96/14342 and WO 96/16116, and Japanese Patent No. 2742892).

However, in the above-mentioned patent applications, we expected the use of the materials for shaped articles, such as containers, dishes, cups, knives, forks and spoons, and the use thereof in horticultural and agricultural use, for example, as films, sheets, laminates and foams. In these, we did not expected them to be applicable to blocks for models that require the workability, machinability and dimension stability such as those mentioned hereinabove.

In preferred embodiments of the present invention, the esterified starch has a DS of 1.0 to 2.8, the esterified starch is prepared from a high-amylose starch having an amylose content of 50 % or higher, and it has ester groups with from 2 to 18 carbon atoms.

In more preferred embodiment, the esterified starch is starch acetate, starch propionate, starch acetate propionate, or a mixture of these.

A plasticizer may be added to the biodegradable polymer for the purpose to improve the shapability, workability and machinability of the block. Preferably, an ester plasticizer miscible with the esterified starch and the esterified cellulose may be added thereto in an amount of up to 35 % by weight.

In order to further improve the mechanical properties of the block, an inorganic or organic reinforcing filler may be added to the biodegradable plastic material in an amount of up to 50% by weight.

The biodegradable block for models of the present invention can be produced by kneading the biodegradable polymer optionally along with such an plasticizer and a reinforcing filler, forming it into biodegradable plastic pellets or others, putting them into a mold, melting them under heat therein, and shaping the resulting melt into a block through press shaping.

To produce biodegradable blocks from the block of the invention, the block may be cut or machined with hand tools or machine tools.

The biodegradable block for models of the present invention, as having the constitution mentioned hereinabove, has good workability and machinability and also have necessary mechanical properties (especially, good dimension stability and high heat resistance). as will be demonstrated in the example to be mentioned hereinunder.

The results of the present invention that produces the biodegradable block for models having good workability and machinability and even good mechanical properties are surprising, as will be demonstrated in the cutting and machining tests mentioned hereinunder, in which samples of the biodegradable block of the invention were compared with samples of conventional biodegradable plastics such as those mentioned hereinabove, resulting in that the workability and the machinability and even the mechanical properties of the conventional biodegradable plastic samples were inferior to those of thermosetting plastic samples.

The mode produced by the present invention is characterized in that it is made of a biodegradable plastic material comprising, as the constitutive requirement in the highest conception, a base polymer of a biodegradable polymer and that said biodegradable polymer comprises an esterified starch having a predetermined degree of substitution or a mixture of said esterified starch and an esterified cellulose having a predetermined degree of substitution.

(1) The esterified starch to be used herein is one having a middle degree or high degree of substitution, or that is, one having a DS of 0.4 or more, preferably from 1 .0 to 2.8, more preferably from 1.5 to 2.5.

If an esterified starch having a DS of less than o.4 is used, it is impossible to obtain blocks with good water proofness, and is also impossible to obtain blocks with good mechanical properties, or that is, those having the necessary dimension stability, mechanical strength and heat resistance, and in addition, the blocks comprising such an esterified starch do not have good workability and machinability. On the other hand, if an esterified starch having a DS of more than 2.8 is used, the biodegradability of the blocks obtained is poor although their mechanical properties such as those mentioned above may be good.

Preferably used herein are mono-esterified or mixed-esterified starches of which the ester group has generally from 2 to 18 carbon atoms, desirably from 2 to 6 carbon atoms, and which may be prepared by mono-esterifying or mixed-esterifying starches with one or more organic acids, such as carboxylic acids mentioned below (the parenthesized number indicates the number of carbon atoms constituting the acid). The mixed-esterified starches as referred to herein include those each having two or more different ester substituents in one molecule.
(a) Saturated fatty acids: Acetic acid (C2), propionic acid (C3), butyric acid (C4), caproic acid (C6), caprylic acid (C8), lauric acid (C12), palmitic acid (C16) and stearic acid (C18);
(b) Unsaturated fatty acids: Acrylic acid (C3), crotonic acid (C4), isocrotonic acid (C4), oleic acid (C15)
(c) Aliphatic saturated or unsaturated dicarboxylic acid: Malonic acid (C3), succinic acid (C4), adipic acid (C6), maleic acid (C4) and fumalic acid (C4);
(d) Aromatic carboxylic acid; Benzoic acid and phthalic acid.

In particular, especially preferred are starch acetate, starch propionate, and a mixed-esterified starch of starch acetate propionate, which may be used singly or as combined, as producing with ease blocks (and also models) having good mechanical strength and heat resistance.

The esterified starches for use in the present invention can be produced by any known methods using any of carboxylic acid anhydrides or chlorides, or even any other esterifying reagents. However, it is desirable to use the methods disclosed in the applicant's own prior patent publications such as those mentioned below, as producing with ease the intended biodegradable blocks with good mechanical strength and heat resistance.
(a) A method of using water-free reaction such as that disclosed in WO 95/04083 :
   "A starch is mixed and reacted with an esterifying reagent in a water-free aprotic solvent in a modification step to give a hydrophobic, biodegradable starch ester product of which the ester group has up to 18 carbon atoms."
   Especially, preferable one is a starch ester having a DS of 1.0 to 2.8, which is produced by a process wherein a purified starch containing at least 50% of amylose is reacted with an acylation reagent in the presence of a basic catalyst in an anhydrous aprotic solvent.
(b) A method of using a vinyl ester of a carboxylic acid, such as that disclosed in WO 96/14342:
   "A method of producing a starch ester using a vinyl ester as an esterifying reagent, which is characterized in that:
   a starch is reacted with said vinyl ester, of which the ester group has from 2 to 18 carbon atoms, in a non-aqueous organic solvent in the presence of an esterification catalyst."
(c) An esterified, polyester-grafted starch which is formed by esterifying starch and grafting starch with polyester, such as that disclosed in Japanese Patent No. 2742892:
   "An esterified, polyester-grafted starch which is formed by esterifying starch and grafting starch with polyester, characterized in that the esterification involves one or more saturated or unsaturated aliphatic acids or aromatic carboxylic acids having 2 to 18 carbon atoms and the polyester is one which is formed from one or more 4- to 12-membered lactones by ring-opening polymerization, with the terminal hydroxyl groups being almost completely blocked by esterification."
(d) Short / long chain acyl group substituted esterified starch, such as that disclosed in Japanese Patent No. 2939586:
   "A mixed esterified starch of which hydrogen in the reactive hydroxyl group of the same starch molecule is substituted with an acyl group that has from 2 to 4 carbon atoms (short chain acyl group) and an acyl group that has from 6 to 18 carbon atoms (long chain acyl group), and the ratio of said short chain acyl group and long chain acyl group is adjusted so that said esterified starch is possible to be thermoplastic without a plasticizer and to form molds and films."

The starting starch to be esterified may include raw starches to be derived from com, potato, sweet potato, wheat, sago, cassava, tapioca, rice, bean, arrowroot, bracken, or lotus, and also physically-modified starches to be prepared by pregelatinizing said raw starches, enzyme-modified starches to be prepared by decomposing them with enzymes, as well as chemically-modified starches to be prepared by processing them with acids or hypochlorous acid or by ionizing or hydroxylating (or etherifying) them.

Of these, preferred are high-amylose starches having an amylose content of 50% by weight or more, as producing with ease block with good mechanical properties (high dimension stability, good heat resistance, high strength) with good workability and machinability.

12) The esterified cellulose to be used herein is like the esterified starch mentioned hereinabove, one having a middle degree or high degree of substitution, or that is, one having a DS of 0.4 or more, preferably from 1.0 to 2.8, more preferably from 1.5 to 2.5. If an esterified cellulose having a DS of less than 0.4 is used, it is impossible to obtain blocks with good water proofness, and it is also impossible to obtain blocks with good mechanical properties (e.g., high dimension stability, good heat resistance, high strength). On the other hand, if an esterified cellulose having a DS of more than 2.8 is used, the biodegradability of the blocks obtained is poor although their mechanical properties such as those mentioned above may be good.

As in the esterified starch mentioned hereinabove, the ester group of the esterified cellulose may have from 2 to 18 carbon atoms. Of such esterified cellulose, preferred are cellulose esters with lower fatty acids, such as cellulose acetate and cellulose propionate, which may be used singly or as combined, as producing with ease blocks (and also models) having the necessary mechanical properties.

The mixing ratio of the esterified starch to the esterified cellulose to give the intended biodegradable polymer for use in the present invention shall fall between 10/0 and 1/9, preferably between 10/0 and 4/6, by weight.

If the proportion of the esterified starch is too small, it is impossible to obtain block with good workability and machinability. The higher the proportion of the esterified cellulose, the better the mechanical characteristics of the blocks obtained.
A part of the esterified starch or the esterified cellulose may be substituted with any of other biodegradable polymers, such as polycaprolactones, polylactic acids, polyadipates, polyhydroxybutyrates and polyhydroxybutyrate valerates, only within the range not having any negative influence on the workability and machinability of the resulting blocks. Although, favorably, other biodegradable polymers is not exceed than 70% as weight in the base polymer, because excess amount of other biodegradable polymers will be cause of poor workability and machinability,

(3) The biodegradable plastic material of the present invention may contain an ester plasticizer.

The functional groups in ester plasticizers are common to esterified starches and celluloses, and therefore ester plasticizers are well miscible with esterified starches and celluloses. Accordingly, if added to the plastic material of the invention, the ester plasticizer improves the flowability (shapability) of the plastic material to be formed into blocks for models without worsening the mechanical properties of the blocks formed.
The amount of the plasticizer to be added depend on the ester substituents in the esterified starch and optionally the esterified cellulose constituting the plastic material and even on the degree of substitution of such esterified starch and cellulose. It is desirable to add a larger amount of such a plasticizer to esterified starch and cellulose of which the ester group has smaller carbon atoms and which have a lower degree of substitution. The suitable amount of the plasticizer to be added shall be determined in consideration of the glass transition temperature (Tg) of the esterified starch and optionally the esterified cellulose constituting the plastic material.

Desirably, the amount of the plasticizer to be added is controlled to be 35 % by weight or less, preferably 30 % by weight or less, thereby making the plastic material comprising the plasticizer have a Tg of from 65 to 120°C. If the amount of the plasticizer added is more than 35 % by weight, it is difficult to make the resulting plastic material have a Tg falling within the above-mentioned range and, in addition, the plasticizer added will often bleed out of the blocks formed, whereby the dimension stability and the heat resistance of the blocks are often worsened.

Preferred examples of ester plasticizers usable in the present invention are mentioned below.
(a) Phthalates: Methyl, diethyl, dipropyl, dibutyl, dihexyl, diheptyl and dioctyl phthalates, and ethylpthalylethyl glycolate and butylphthalylbutyl glycolate;
(b) Esters of aliphatic dibasic acids: Diethyl, dibutyl and dioctyl adipates, succinates, azetates and sebacates;
(c) Fatty acid ester derivatives: Methyl, ethyl, butyl and propyl oleates, stearates, erucates, licinolates, lactates and citrates;
(d) Esters of polyalcohols: Glycerol triacetate (triacetin), glycerol mono- and di-acetates, glycerol mono-, di- and tri-propionates, glycerol tributanoate (tributyrin), glycerol mono- and di- butanoates and glycerol mono-, di- and tri-stearates;
(e) Esters of hydroxyacids: Methyl acetyllicinolate and triethyl acetylcitrate;
(f) Phosphates: Tributyl phosphate and triphenyl phosphate.

Of these, preferred are esters of polyalcohols, such as triacetin and tributyrin, as being highly miscible with esterified starches and esterified cellulose.

(4) The biodegradable plastic material of the present invention may further contain any one or more of biodegradable organic fillers having no negative influence on the workability and machinability of blocks, such as those mentioned below, and inorganic fillers having no negative influence on the workability and machinability of blocks and even on soil organisms, such as those mentioned below, in an amount of 50 % by weight or less, desirably 30 % by weight or less, by which the intended mechanical strength, heat resistance and dimension stability (anti-shrinking property) of the blocks to be formed can be controlled. If, however the filler content is more than 35 % by weight, it will often have some negative influences on the workability and machinability of the blocks formed.
(a) Organic fillers: Starch, cellulose fiber, cellulose powder, wood powder, wood fiber, pulp, pecan fiber, cotton linters, lignin, grain husks and cotton powder;
(b) Inorganic fillers: Talc, calcium carbonate, titanium oxide, aluminium oxide, clay, sand, diaromaceous earth, silicates, mica, glass (beads, flakes, fiber) and quartz powder (flint).

Of these, preferred are cellulosic fiber-type fillers, as effectively improving the mechanical strength of the block formed without having any negative influence on the workability and machinability thereof. More preferred is cellulosic microfiber as characterized by the following factors, in view of the impact strength of the blocks formed. Concretely employable is a commercially-available product, "SOLKA-FLOC" (sold by Hayashi Chemical Co.).
Mean length (L): 20 to 750 *µ*m (desirably, 30 to 600 *µ*m)
Mean diameter (D): 5 to 80 *µ*m (desirably, 10 to 70 *µ*m)
L/D: Nearly 3 to 60 (desirably, nearly 5 to 50)

As other cellulosic fibers, also employable herein are typically cotton linters, oat fiber, pecan fiber and other natural fibers, as well as even semi-synthetic fibers such as acetate rayon fiber.

(5) The biodegradable plastic material of the present invention may further contain, in addition to the above-mentioned plasticizer and filler, any other additives, such as colorants, stabilizers, antioxidants, deodorizers, flame retardants, lubricants and mold release agents.

The biodegradable plastic material of the present invention can be easily worked or machined to give shaped articles with good water-proofness and good mechanical properties. Most importantly, the articles made of the material are completely biodegradable, and therefore, after having been used to be useless, these can be composted in a composter such as a kitchen garbage processor.

We, the present inventors have found that, if the biodegradable plastic material of the present invention is desired to be used for forming blocks for models, the esterified starch or mixture of the esterified starch and the esterified cellulose that shall constitute the material must be kneaded optionally along with a plasticizer and/or a filler, and then fully homogenized at temperatures higher than the melting point of the resulting mix, prior to shaping the plastic material into blocks.
The plastic material of the invention is, like conventional thermoplastic resins, powdered or pelletized, using a mixer or pelletizer, to be formed into a shaping material.

From the thus-prepared shaping material, blocks for models can be produced, for example, in the manner mentioned below.

The shaping material is put into a press-shaping mold, and fully heated therein for a sufficient period of time to form a uniform melt. The heating temperature, though depending on the glass transition temperature of the material, may be generally between 110 °C and 210 °C.

The resulting melt is compressed using a press, or that is, press-shaped to have a desired dimension, and thereafter cooled to room temperature to give a tabular block. A plurality of these blocks thus formed may be bonded together with a suitable adhesive to give a block mass for models having a desired dimension. The thus-obtained blocks may be cut or machined with hand tools or machine tools, such as NC machines or lathes, into intended models.

As has been described in detail hereinabove, the biodegradable block for models of the present invention comprises a biodegradable polymer mixture that is comprised of an esterified starch having a DS of 0.4 or more and an esterified cellulose having a DS of 0.4 or more in a ratio by weight of the former to the latter of being between 10/0 and 1/9. Therefore, as will be demonstrated in the following examples, the block has excellent workability and machinability and also good mechanical properties, such as high dimension stability, good heat resistance and high strength, to such a degree that it is applicable to the formation of models, while surely maintaining its biodegradability.

### EXAMPLE

Now, to demonstrate the effect of the present invention, hereinunder mentioned as example of the invention along with comparative examples to these, which, however, are not intended to restrict the scope of the invention.

### A. Preparation of Biodegradable Plastic Materials:

### (1) Preparation of Esterified Starch:

(a) According to the method described in WO 95/04083 an esterified starch was prepared in the manner mentioned below.
   1000 g of high-amylose corn starch (amylose content: 70 %) was suspended in 9000 g of dimethylsulfoxide (DMSO), and heated up to 80°C to give a uniform solution. Next, the mixture was cooled to room temperature, 58 g of dimethylaminopyridine dissolved in 1600 ml of DMSO was added, and 1500 g of sodium bicarbonate was added. Then the mixture was cooled to 40°C. Next, 1700 g of acetic anhydride was added slowly to the mixture and reacted for 2 hours with continuous agitation. The resulting reaction mixture was poured into 10 fold of water, and the precipitate thus formed was collected through centrifugal filtration. The precipitate was suspended in 30 liters of water and washed through dewatering filtration, which was repeated three times. Next, this was put into an oven and dried therein at 55 °C to prepare a powdery acetylated starch, which has DS of nearly 1.9.
(b) According to the method described in WO 96/14342 an esterified starch was prepared in the manner mentioned below.
   1000 g of high-amylose corn starch (amylose content: 70 %) was suspended in 8000 g of dimethylsulfoxide (DMSO), and heated up to 80 °C to give a uniform solution. Still at 80 °C, 100 g of sodium carbonate and 440 g of vinyl laurate were added to this in that order and reacted for 2 hours. The resulting reaction mixture was poured into 30 liters of water, and the precipitate thus formed was collected through centrifugal filtration. The precipitate was suspended in 30 liters of water and washed through dewatering filtration, which was repeated three times. Next, this was put into an oven and dried therein at 60 °C to prepare a powdery acetylated starch, which has DS of nearly 0.75.
(c) An esterified, polyester-grafted starch, such as that disclosed in Japanese Patent No. 2742892.
   1000 g of corn starch was suspended in 8000 g of dimethylsulfoxide (DMSO), and heated up to 80 °C and gelatinized in 20 minutes. Next, 300 g of sodium carbonate, 6685 g of e-caprolactone and 2208 g of vinyl propionate monomer were added and reacted for 5 hours at 80 °C. The resulting reaction mixture was poured into water, and the precipitate thus formed was collected. The precipitate was washed, dewatered and dried to prepare a powdery esterified, polyester-grafted starch, which has DS of nearly 2.6.
(d) Short/long chain acyl group substituted esterified starch, such as that disclosed in Japanese Patent No. 2939586.
   1000 g of corn starch dried less than 1 % of moisture was suspended in 8000 g of dimethylsulfoxide (DMSO), and heated up to 90 °C and gelatinized in 20 minutes. Next, 50 g of bromo t-butyl and 5320 g of hexadecylketenedimer (C17) were poured in to the mixture. The vessel was vacuumed and reacted for 5 hours at 90 °C with refluxing DMSO. at 80 °C. The resulting reaction mixture was poured into water, and the precipitate thus formed was collected. The precipitate was washed, dewatered and dried to prepare a powdery esterified, polyester-grafted starch, which has DS of nearly 2.6.
(d) Short/long chain acyl group substituted esterified starch, such as that disclosed in Japanese Patent No. 2939586.
   1000 g of corn starch dried less than 1 % of moisture was suspended in 8000 g of dimethylsulfoxide (DMSO), and heated up to 90 °C and gelatinized in 20 minutes. Next, 50 g of bromo t-butyl and 5320 g of hexadecylketenedimer (C17) were poured in to the mixture. The vessel was vacuumed and reacted for 5 hours at 90 °C with refluxing DMSO. Next, after breaking the vacuum to the atmosphere pressure, 1260 g of acetic anhydride and 1040 g of sodium bicarbonate were added and reacted for 1 hours at reflux temperature. The byproduct and non-reacted matter was poured out. The resulting reaction mixture was poured into water with vigorous agitation and the precipitate thus formed was collected. The precipitate was suspended in 50 litters of water and washed through dewatering filtration, which was repeated five times. Each degree of substitution of short or long chain acyl group of this starch ester was 1.89 for short chain acyl group (C2) and 0.23 for long chain acyl group (C17), which was analyzed by the saponification method. (Genung & Mallet, 1941, Smith, 1967)

### (2) Preparation of Biodegradable Plastic Materials:

### Example 1:

630 g of each esterified starch prepared in the above and the 1:1 mixture of (a) and (d), and 300 g of cellulosic fiber "SOLKA-FLOC" (sold by Hayashi Chemical Co.) were put into a Henshel mixer. While starring these in the mixer, 70 g of triacetin was added thereto little by little to give a uniform powder. Each powder was pelletized through a double- screw extruder having screws with diameter of 2.6 cm (L/D = 25) and equipped with three dies, under the temperature condition mentioned below, to prepare a plastic material.

### Temperature Condition:

Zone 1(supply zone): 80°C

Zone 2: 130 °C

Zone 3: 190°C

Zone 4: 190°C

Zone 5 (die zone): 170°C

### Example 2:

Another plastic material was prepared through pelletization in the same manner as in Example 1, except that 300 g of talc was used in place of 300 g of cellulosic fiber.

### Example 3:

320 g of each esterified starch prepared in the above, and 480 g of powder of an esterified cellulose "Acetate Flakes" (cellulose acetate having a DS of 2.5, produced by Teijin Ltd.) were put into a Henshel mixer. While stirring these in the mixer, 200 g of triacetin was added thereto little by little to give a uniform powder. The powder was palletized through the same double- screw extruder under the same condition as in Example 1 to prepare a plastic material.

### Comparative Example 1:

Herein used was a polylactic acid, "Lacty" (trade name of the product of Shimadzu Corporation).

### Comparative Example 2:

Herein used was a polybutylen succinate, "Bionolle #3010" (trade name of the product of Showa Highpolymer Co.).

### Comparative Example 3:

Herein used was a polyeaprolactone, "TONE 787" (trade name of the product of Union Carbide Chemicals and Plastics Company. Inc.)

### Comparative Example 4:

Herein used was a polyhydroxy butyrate valerate. "Biopol" (trade name of the product of Zeneca Inc.).

### Comparative Example 5:

Herein used was a starch-polyvinyl alcohol alloy, "Mater-Bi AF10H)" (trade name of the product of Novamont Co.).

### B. Preparation of Blocks for Models:

Each of the plastic material samples of Examples 1 to 3 and Comparative Examples 1 to 5 mentioned above was put into the mold of a pressing machine. "Heat Press" (trade name of the machine of Tester Industrial Co.), then melted therein under heat in different conditions as mentioned below, and shaped under pressure (200 kgf/cm² x 5 min). Thus were obtained various block samples for cutting and machining tests. The comparative samples were only for cutting tests with hand tools.

### Heating Conditions:

Examples 1 to 3: 180 °C x 5 min.
Comparative Example 1: 190°C x 5 min.
Comparative Example 2: 170 °C x 5 min.
Comparative Example 3: 150 °C x 5 min.
Comparative Example 4: 180°C x 5 min.
Comparative Example 5: 180 °C x 5 min.

### Sizes of Block Samples:

(1) For cutting test with hand tools: 10 x 10 x 2 cm
(2) For machining test with end mill: 10 x 10 x 6 cm
(3) For machining test with band saw: 40 x 30 x 15 cm

### C. Evaluation of Workability and Machinability of Block Samples:

### (1) Evaluation of Workability with Hand Tools:

Using hand tools such as knives and chisels, the block samples were cut. The samples of Examples 1 to 3 of the invention were well cut, and their workability was good. The pieces cut out of these had sharp edges and smooth faces, while having vivid outward appearance. As opposed to these, the samples of Comparative Examples 1 to 5 could not cut well, and their workability was bad. In addition, the sample of Comparative Example 1 (polylactic acid) and that of Comparative Example 3 (polycaprolactone) were problematic in the heat resistance; and the sample of Comparative Example 4 (starch-polyvinyl alcohol alloy) was problematic in the dimension stability as being hygroscopic.

### (2) Evaluation of Machinability with End Mill:

Using an end mill (20 mm φ) NC machine, each block sample was holed, at an end mill rotation of 600 rpm, to have a hole having a diameter of 5 cm and a depth of 3 cm. All samples of Examples 1 to 3 of the invention tested herein had sharp holes with no broken edge, and the inner walls of the holes formed were all finished to be smooth. No dust adhered to the end mill used, and little powder scattered during the machining.

### (3) Evaluation of Machinability with Band Saw:

Using a band saw, each block sample was cut into pieces of 10 x 10 x 5 cm, at a sawing speed of 4 m/sec. All samples of Examples 1 to 3 of the invention tested herein were cut into sharp pieces with no broken edge, and their cut faces were smooth and good.

### D. Mechanical Properties of Biodegradable Plastic Materials:

The biodegradable plastic samples as prepared in Example 1 to 3 were tested to determine the tensile strength and the tensile modulus thereof in accordance with ASTM D638, to determine the flexural strength and the flexural modulus thereof in accordance with ASTM D790, and to determine the glass transition temperature thereof in accordance with JIS K7121.

The data obtained are shown in Table I below, from which it is known that these samples tested herein both have satisfactory mechanical strength well applicable to the production of models.

**Table 1:**

| Examples | Example 1 | | | | | Example 2 | Example 3 |
|---|---|---|---|---|---|---|---|
| Esterified starch | (a) | (b) | (c) | (d) | (a)+(d) | (a) | (a) |
| Tensile Strength (kgf/cm²) | 410 | 380 | 350 | 340 | 360 | 310 | 420 |
| Tensile Modulus (kgf/cm²) | 45,200 | 35,000 | 18,000 | 30,000 | 38,000 | 56,400 | 44,500 |
| Flexural Strength (kgf/cm²) | 860 | 650 | 570 | 600 | 750 | 700 | 850 |
| Flexural Modulus (kgf/ cm²) | 54,400 | 38,000 | 24,500 | 35,000 | 41,000 | 68,700 | 53,700 |
| Glass Transition Temperature Tg CJ°C | 97 | 105 | 123 | 100 | 95 | 101 | 96 |
| Biodegradability Decreased Weight (%) | 87 | vanished (100) | 44 | 36 | 70 | 24 | 27 |

### E. Biodegradability of Biodegradable Plastic Materials:

Each of the blocks for models for cutting test with hand tools (10 x 10 x 2 cm) of Examples 1 to 3 were laid underground in the depth of 5 cm of the soil for plant at the open-air field in Hekinan city, Aichi, Japan. Then after 6 months, test blocks were dug up and washed, dried, moistured and weighed. The biodegradability was calculated by the % of reduced weight compared with the before. The data obtained are shown in Table 1. As a reference, polyester resin was used as a substitute for esterified starch resin, and the blocks for models were prepared as the same manner for Examples 1 and 2 and were tested the biodegradability. Each of reduced weight was 7 % and 0.4 % respectively.

## Claims

1. A method of producing a biodegradable patterning model to be used for producing final products comprising the steps of:
placing into a mold a biodegradable plastics material comprising a biodegradable polymer comprising an esterified starch having a degree of substitution (DS) of 0.4 or more;
melting the biodegradable plastics material in the mold using heat;
shaping the biodegradable plastics material in the mold under compression so as to form a block; and
cutting or machining the block thereby to form the biodegradable model.

2. A method according to claim 1, wherein the biodegradable plastics material is placed into the mold in a form comprising pellets.

3. A method according to claim 1, wherein the biodegradable plastics material is placed into the mold in a form comprising powder.

4. A method according to any one of claims 1 to 3, wherein the biodegradable polymer further comprises an esterified cellulose having a DS of 0.4 or more, the weight ratio of esterified starch to esterified cellulose being 10/0 to 1/9.

5. A method according to any one of claims 1 to 4, wherein the esterified starch comprises at least one of
(1) an esterified starch prepared by esterifying a starch with an esterifying reagent of a vinyl ester in a non-aqueous organic solvent in the presence of an esterification catalyst;
(2) an esterified, polyester-grafted starch formed by esterifying starch and grafting starch with polyester; and
(3) a mixed esterified starch of which hydrogen in the reactive hydroxyl group of the starch molecule is substituted with a short claim acyl group having from 2 to 4 carbon atoms and a long chain acyl group having from 6 to 18 carbon atoms.

6. A method according to any one of claims 1 to 5, wherein the esterified starch is prepared from a high-amylose starch having an amylose content of 50% by weight or higher.

7. A method according to any one of claims 1 to 6, wherein the esterified starch has a DS of 1.0 to 2.8.

8. A method according to any one of claims 1 to 7, wherein the esterified starch contains a starch ester having a DS of 1.0 to 2.8 produced by reacting a purified starch containing at least 50% amylose with an acylation reagent in the presence of a basic catalyst in an anhydrous aprotic solvent.

9. A method according to any one of claims 1 to 8, wherein the biodegradable plastics material comprises a mixture of the biodegradable polymer and biodegradable polyester.

10. A method according to any one of claims 1 to 9, wherein the biodegradable plastics material contains an ester plasticizer in an amount of 35% by weight or less and has a glass transition temperature between 65 and 120°C.

11. A method according to any one of claims 1 to 10, wherein the biodegradable plastics material contain an organic or inorganic filler in an amount of 50% by weight or less.

12. A method according to claim 11, wherein the organic filler is cellulosic fiber.

13. A method according to claim 12, wherein the cellulosic fiber is cellulosic microfiber having a mean length (L) of 20 to 750 µm and a mean diameter (D) of 5 to 80 µm, the ratio L/D being 3 to 60.

14. A method according to any one of claims 1 to 13, wherein the step of cutting or machining is accomplished using hand tools or machine tools.

## Patentansprüche

1. Verfahren zur Herstellung eines bioabbaubaren Mustermodells zur Verwendung bei der Herstellung von Endprodukten, welches die folgenden Schritte umfasst:
Anordnen eines bioabbaubaren Kunststoffmaterials, welches ein bioabbaubares Polymer umfasst, welches eine veresterte Stärke mit einem Substitutionsgrad (DS) von 0,4 oder mehr umfasst, in einem Formwerkzeug;
Schmelzen des bioabbaubaren Kunststoffmaterials in dem Formwerkzeug unter Anwendung von Wärme;
Formen des bioabbaubaren Kunststoffmaterials in dem Formwerkzeug unter Kompression, um einen Block zu formen; und
Schneiden oder Bearbeiten des Blocks, um **dadurch** das bioabbaubare Modell zu formen.

2. Verfahren nach Anspruch 1, wobei das bioabbaubare Kunststoffmaterial in einer Form, welche Pellets umfasst, in dem Formwerkzeug angeordnet wird.

3. Verfahren nach Anspruch 1, wobei das bioabbaubare Kunststoffmaterial in einer Form, welche ein Pulver umfasst, in dem Formwerkzeug angeordnet wird.

4. Verfahren nach einem der Ansprüche 1 bis 3, wobei das bioabbaubare Polymer ferner eine veresterte Cellulose mit einem DS von 0,4 oder mehr umfasst und das Gewichtsverhältnis der veresterten Stärke zu der veresterten Cellulose 10/0 bis 1/9 beträgt.

5. Verfahren nach einem der Ansprüche 1 bis 4, wobei die veresterte Stärke mindestens eine der Folgenden umfasst:
(1) eine veresterte Stärke, hergestellt durch Verestern einer Stärke mit dem Veresterungsreagens eines Vinylesters in einem nichtwässrigen organischen Lösungsmittel in Gegenwart eines Veresterungskatalysators;
(2) eine veresterte, polyestergepfropfte Stärke, gebildet durch Verestern von Stärke und Verpfropfen der Stärke mit Polyester; und
(3) eine gemischte veresterte Stärke, bei welcher der Wasserstoff in der reaktiven Hydroxylgruppe des Stärkemoleküls durch eine kurzkettige Acylgruppe mit 2 bis 4 Kohlenstoffatomen und eine langkettige Acylgruppe mit 6 bis 18 Kohlenstoffatomen substituiert ist.

6. Verfahren nach einem der Ansprüche 1 bis 5, wobei die veresterte Stärke aus einer amylosereichen Stärke mit einem Amylosegehalt von 50 Gewichts-% oder mehr hergestellt ist.

7. Verfahren nach einem der Ansprüche 1 bis 6, wobei die veresterte Stärke einen DS von 1,0 bis 2,8 aufweist.

8. Verfahren nach einem der Ansprüche 1 bis 7, wobei die veresterte Stärke einen Stärkeester mit einem DS von 1,0 bis 2,8 enthält, welcher durch Reaktion einer gereinigten Stärke, welche mindestens 50 % Amylose enthält, mit einem Acylierungsreagens in Gegenwart eines basischen Katalysators in einem wasserfreien aprotischen Lösungsmittel hergestellt ist.

9. Verfahren nach einem der Ansprüche 1 bis 8, wobei das bioabbaubare Kunststoffmaterial ein Gemisch des bioabbaubaren Polymers und des bioabbaubaren Polyesters umfasst.

10. Verfahren nach einem der Ansprüche 1 bis 9, wobei das bioabbaubare Kunststoffmaterial einen Ester-Weichmacher in einer Menge von 35 Gewichts-% oder weniger enthält und eine Glasübergangstemperatur zwischen 65 °C und 120 °C aufweist.

11. Verfahren nach einem der Ansprüche 1 bis 10, wobei das bioabbaubare Kunststoffmaterial einen organischen oder anorganischen Füllstoff in einer Menge von 50 Gewichts-% oder weniger enthält.

12. Verfahren nach Anspruch 11, wobei der organische Füllstoff eine Cellulosefaser ist.

13. Verfahren nach Anspruch 12, wobei die Cellulosefaser eine Cellulosemikrofaser mit einer mittleren Länge (L) von 20 bis 750 *µ*m und einem mittleren Durchmesser (D) von 5 bis 80 *µ*m ist, wobei das L/D-Verhältnis 3 bis 60 beträgt.

14. Verfahren nach einem der Ansprüche 1 bis 13, wobei der Schritt des Schneidens oder Bearbeitens unter Verwendung von Handwerkzeugen oder Werkzeugmaschinen durchgeführt wird.

## Revendications

1. Procédé de fabrication d'un modèle à configuration biodégradable à utiliser pour produire des produits finis, comportant les étapes consistant à :
placer dans un moule une matière plastique biodégradable comportant un polymère biodégradable comprenant un amidon estérifié présentant un degré de substitution (DS) de 0,4 ou plus ;
faire fondre le matériau plastique biodégradable dans le moule en utilisant de la chaleur ;
configurer le matériau plastique biodégradable dans le moule sous pression de façon à former un bloc ; et
découper ou usiner le bloc de façon à former ainsi le modèle biodégradable.

2. Procédé selon la revendication 1 dans lequel le matériau plastique biodégradable est placé dans le moule sous une forme constituée de pastilles.

3. Procédé selon la revendication 1 dans lequel le matériau plastique biodégradable est placé dans le moule sous une forme constituée de poudre.

4. Procédé selon l'une quelconque des revendications 1 à 3, dans lequel le polymère biodégradable comprend, de plus, une cellulose estérifiée présentant un degré de substitution de 0,4 ou plus, le rapport pondéral de l'amidon estérifié à la cellule estérifiée étant de 10/0 à 1/9.

5. Procédé selon l'une quelconque des revendications 1 à 4, dans lequel l'amidon estérifié comprend au moins l'un d'un :
(1) amidon estérifié préparé en estérifiant un amidon avec un réactif d'estérification d'un ester de vinyle dans un solvant organique non aqueux en présence d'un catalyseur d'estérification ;
(2) amidon estérifié, greffé-polyester, formé en estérifiant l'amidon et en greffant l'amidon avec un polyester ; et
(3) amidon estérifié mélangé dont l'hydrogène du groupe hydroxyle réactif de la molécule d'amidon est substitué avec un groupe acyle à chaîne courte ayant de 2 à 4 atomes de carbone et un groupe acyle à chaîne longue ayant de 6 à 18 atomes de carbone.

6. Procédé selon l'une quelconque des revendications 1 à 5, dans lequel l'amidon estérifié est préparé à partir d'un amidon à teneur en amylose élevée ayant une teneur en amylose de 50% en poids ou plus.

7. Procédé selon l'une quelconque des revendications 1 à 6, dans lequel l'amidon estérifié présente un degré de substitution de 1,0 à 2,8.

8. Procédé selon l'une quelconque des revendications 1 à 7, dans lequel l'amidon estérifié contient un ester d'amidon ayant un degré de substitution de 1,0 à 2,8 produit en faisant réagir un amidon purifié contenant au moins 50% d'amylose avec un réactif d'acylation en présence d'un catalyseur basique dans un solvant exempt de protons et anhydre.

9. Procédé selon l'une quelconque des revendications 1 à 8, dans lequel le matériau plastique biodégradable comprend un mélange du polymère biodégradable et du polyester biodégradable.

10. Procédé selon l'une quelconque des revendications 1 à 9, dans lequel le matériau plastique biodégradable contient un plastifiant aux esters dans une quantité représentant 35% en poids, ou moins, et possède une température de transition vitreuse comprise entre 65 et 120°C.

11. Procédé selon l'une quelconque des revendications 1 à 10, dans lequel le matériau plastique biodégradable contient une charge organique ou inorganique dans une quantité de 50% en poids, ou moins.

12. Procédé selon la revendication 11, dans lequel la charge organique est une fibre cellulosique.

13. Procédé selon la revendication 12, dans lequel la fibre cellulosique est une microfibre cellulosique présentant une longueur moyenne (L) de 20 à 750 µm et un diamètre moyen (D) de 5 à 80 µm, le rapport L/D étant de 3 à 60.

14. Procédé selon l'une quelconque des revendications 1 à 13, dans lequel l'étape consistant à découper ou à usiner est effectuée en utilisant des outils manuels ou des machines-outils.
